# EUROPEAN PATENT SPECIFICATION

(11) **EP 0 370 828 B1**
(45) Date of publication and mention of the grant of the patent: **22.06.1994**
(21) Application number: 89312230.9
(22) Date of filing: 24.11.1989
(51) Int. Cl.: H02H 5/10, H02H 11/00

(54) **Electric power installations, especially for office furniture**
Elektrische Strominstallationen, insbesondere für Büromöbel
Installations de puissance électrique, en particulier pour meubles de bureau

(30) Priority: 25.11.1988 GB 8827566; 28.11.1988 GB 8827747; 19.06.1989 GB 8914035
(43) Date of publication of application: 30.05.1990
(73) Proprietor: BICC Public Limited Company, London W1X 5FH (GB)
(72) Inventor: Wright, Stephen Lawrence, Birchwood Warrington Cheshire WA3 6SU (GB)
(74) Representative: Poole, Michael John

(56) References cited:
- DE-C- 0 598 074
- GB-A- 2 167 618
- US-A- 3 934 176

## Description

This invention relates to installations for the supply of electric power to a number of appliances, each drawing a relatively small amount of power; more especially, but not exclusively, it relates to installations for use in open-plan offices and similar environments.

Efficient operation of offices and the like demands the provision of power to large numbers of "small" electric appliances, such as word processors and other computers, typewriters, dictation equipment, lights, telephone and facsimile machines, and fans, the locations and numbers of which may need to be changed at frequent intervals. The power demand of such appliances is small, and a single hard-wired power socket with a capacity of around 15 amps (13 in normal UK practice) can provide adequate power for the typical requirements of up to around twelve appliances. To avoid unsightly and dangerous trailing leads, it is the practice to provide auxiliary power sockets within the office furniture which are interconnected in chains by flexible leads with plug-and-socket or equivalent connections, and with a connection to a mains socket at one end of the chain.

Such installations are often subject to hazard from forces accidentally applied to the flexible leads during re-arrangement of furniture and equipment, as well as spillages or other mishaps, and risk of electric shock can arise if, as a result of such hazards, continuity of the earth conductor fails by wire fracture, broken or improperly connected plugs or other causes, and it is therefore desirable to provide means for monitoring earth continuity and for cutting off the power supply if continuity is in doubt.

One type of installation for this purpose utilises a fourth conductor (hereinafter called the pilot conductor) in addition to the ordinary live (or line), neutral and earth conductors. The present invention provides an improved installation of this type.

US-A-3934176 discloses a protective circuit arrangement for use in the environment of an opencast ("strip") mine comprising a control unit forming part of a power source, a single supply socket connected to phase and earth conductors of the power source under the control of the control unit; a pilot conductor returning from the socket to the control unit; power consuming apparatus for connection to the socket and incorporating an impedance arranged for connection between the earth conductor and the power conductor when the power consuming unit is connected to the socket, the said impedance forming part of a potential divider through which pilot current flows to establish a pilot potential on the pilot conductor; and comparator means in the control unit which monitors the said pilot potential and disconnects the phase poles of the socket from the phase poles of the supply if the pilot potential falls either above or below a preset range of values.

In accordance with the invention, an electric supply installation comprises a control unit, a chain of power supply sockets connected at one end to live, neutral and earth conductors of a power source through the control unit; a pilot conductor is connected via an impedance to the earth conductor at the socket of the chain furthest from the control unit and returns to the control unit; the said impedance forms part of a potential divider through which a pilot current flows to establish a pilot potential on the pilot conductor; and comparator means (preferably a window comparator) monitors the said pilot potential and disconnects the live pole of the chain of supply sockets from the live pole of the supply if the pilot potential falls either above or below a preset range of values.

Preferably when the live pole of the chain of sockets is disconnected from the live pole of the supply, it is connected to neutral via a discharge resistor, in order to ensure rapid discharge of any energy stored in capacitive and/or inductive loads in any of the appliances connected to the sockets.

Resetting means will be required, and preferably the window comparator includes an unbalancing capacitor of such value that it will produce an "out-of-window" signal on reset until the circuits have stabilised, avoiding momentary re-connection if resetting is attempted without the fault being rectified.

Preferably the installation includes also means for detecting loss of continuity from neutral to earth upstream of the control unit and in such event providing an input to the said comparator means such that it will produce a "fault" output resulting in disconnection of the live pole of the supply.

Preferably the said means comprises a pair of capacitors constituting a potential divider between live and neutral poles of the supply, except one of the capacitors is normally shorted by the neutral to earth connection at the substation (or in a PME supply system at many points outside the consumer' s installation). In the event of failure of earth continuity to the neutral to earth connection point, the potential divider generates a sufficient voltage on the earth conductor to provide the required signal. As a precaution against component failure, the signal is preferably transmitted to the comparator means via an opto-isolator.

The invention provides a simple and reliable means of ensuring disconnection on failure of either the earth conductor or the pilot conductor.

The invention will be further described, by way of example, with reference to the accompanying drawings in which Figure 1 is a diagramatic representation of an installation in accordance with the invention and Figures 2 and 3 are circuit diagrams of alternative control unit forming the most characteristic part of the invention.

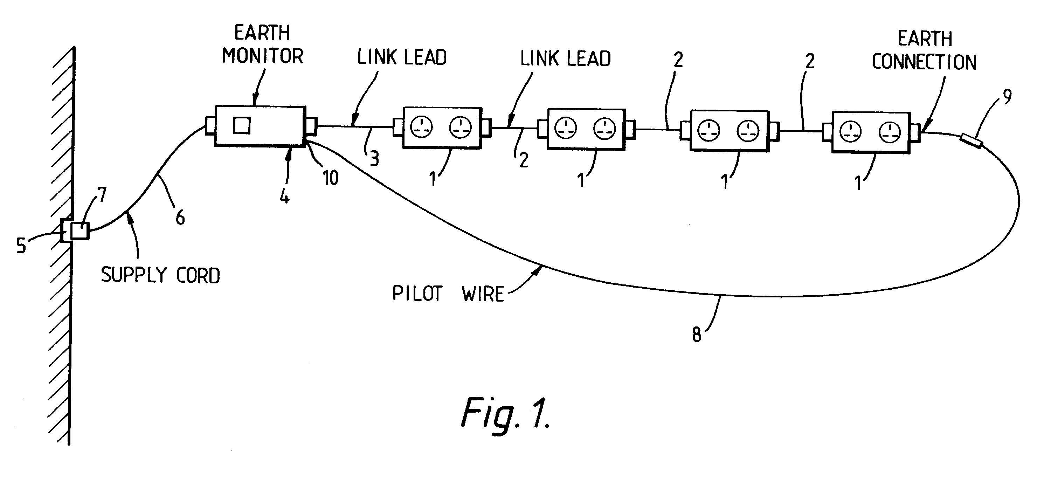

Referring first to Figure 1, the installation comprises a chain of the socket units 1, 1 (in an indefinite number) interconnected by link-leads 2, 2 with appropriate plug and socket connections. A further link-lead 3 connects one end of the chain to a control unit 4 which is in turn connected to a fixed mains supply socket 5 by a conventional supply cord 6 and plug 7. A pilot wire 8 connects a separate terminal on the control unit 4 via a resistance 9 to the earth connection on the socket unit 1 electrically furthest from the control unit. Preferably this pilot wire 8 is wholly independent of and physically separate from the link-leads 2, not only because that allows the link-leads to conform to the usual standards but also to minimise the risk of any inadvertent cross-connection between the pilot wire and any earth point within the connector chain (resistance 9 needs to be at the remote end of the pilot wire so that a "safe" indication will not be given in this event).

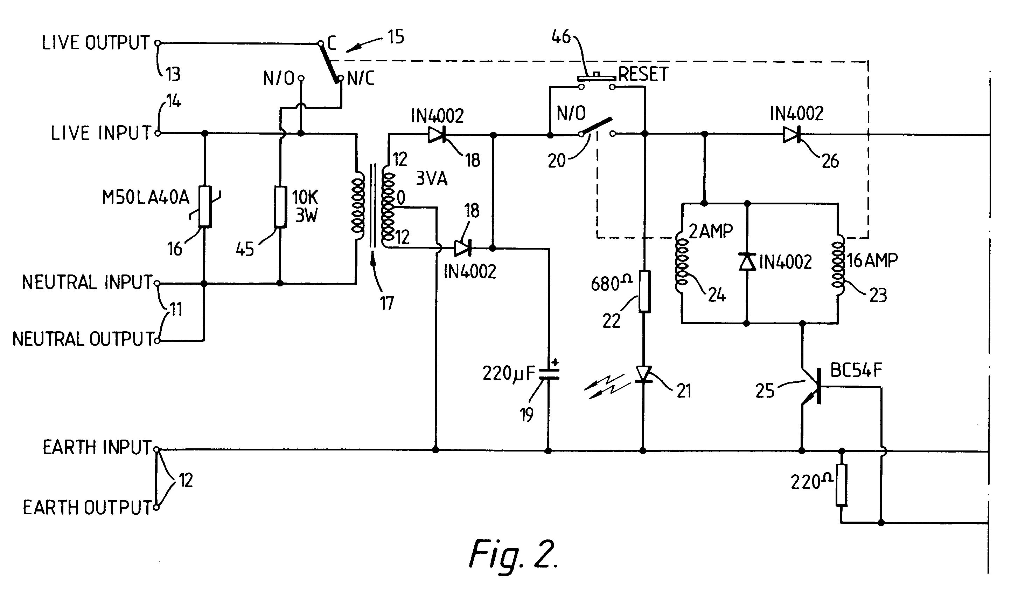

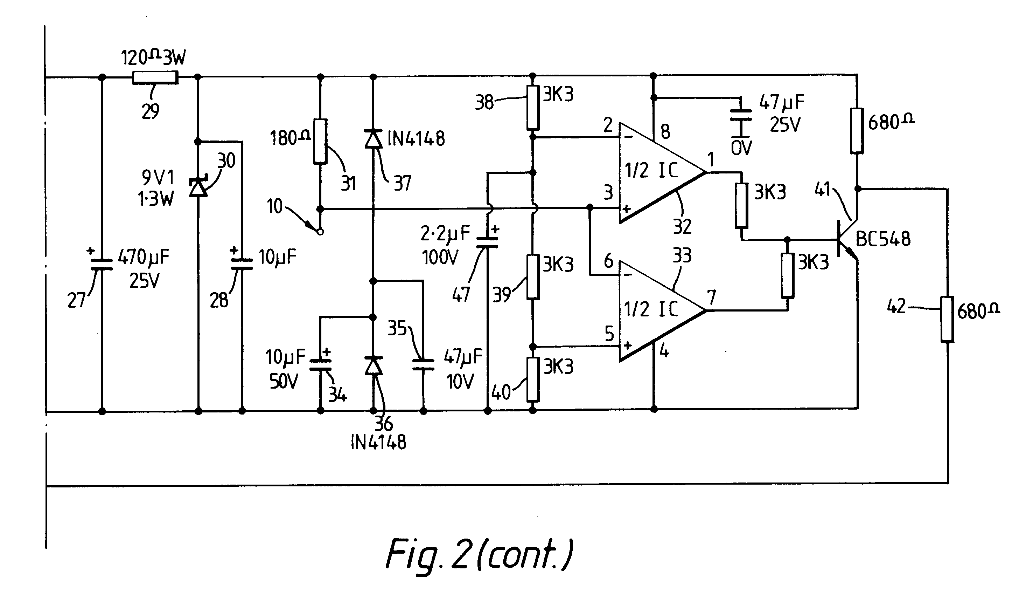

Referring now to Figure 2 and beginning at the left, the control unit provides permanent connections between the input and output terminals 11 for the neutral pole and 12 for earth, while the live output pole 13 is normally connected directly to the live input pole 14 by relay contact 15. A voltage-dependant resistor 16 is connected across the live and neutral inputs to surpress mains-borne voltage spikes. A mains transformer 17 and diodes 18 draw power from the mains for the DC pilot current and for all the control circuits; capacitor 19 stores sufficient energy to ensure that tripping will not occur in the event of momentary power failures (say below 20 milliseconds). Relay contacts 20 normally connects this DC supply to the remainder of the circuitry. Light emitting diode 21 with associated resistor 22 is connected across the power supply downstream of the relay contacts, and thus remains illuminated in normal operation.

The contacts 15 and 20 are held in their normal operation positions by relay coils 23 and 24 respectively, and the current to both of these is controlled by a switching transistor 25.

Power supply to the remainder of the circuit is isolated by a diode 26 and smoothed by a circuit comprising capacitors 27 and 28, resistor 29 and zener diode 30. This supply feeds a voltage divider comprising the resistor 31 shown in this figure and resistor 9 seen in figure 1 (via the terminal 10). This generates a pilot current through the voltage divider and the pilot voltage on terminal 10 which is applied to terminal 3 of an integrated circuit (LM358N) which provides operational amplifiers 32 and 33. The same power supply supplies the integrated circuit and its reference network comprising resistors 38, 39 and 40. Capacitors 34 and 35 and diodes 36 and 37 further protect the integrated circuit from R F interference.

The first operational amplifier 32 provides "high" output if the pilot potential applied to terminal 3 is more positive than the potential developed in the reference network between resistors 38 and 39 and applied to terminal 2 of the integrated circuit; similarly the operational amplifier 33 provides a "high" output when the pilot potential, which is also applied to terminal 6, is more negative than the potential between resistors 39 and 40, applied to terminal 5. The transistor 41 acts as an amplifying "or" gate, and provides a signal via resistor 42, on either operational amplifier providing a "high" output, to switch transistor 25 and thus trip both relays.

Since the relay 20/24 cuts off supply to the electronic circuit, there is no risk of the circuit resetting without manual intervention in the case of an intermittent fault.

The relay 15/23, on tripping, connects discharge resistor 45 between the live output terminal 13 and the neutral terminals 11, ensuring rapid discharge of any capacitive and/or inductive load.

While a fault persists, manual operation of the reset button 46 will illuminate the LED 21, confirming the presence of mains voltage, and power the electronic circuits, but since one of the operational amplifiers will still be giving a "high" output, the relays remain tripped. On releasing the reset button 46, the LED 21 goes out, indicating that a fault is still detected.

When the fault has been eliminated, the initial result of pressing the reset button 46 is the same, because capacitor 47 unbalances the resistance network 38/39/40 and maintains a "high" output on operational amplifier 32 until it is charged. Once charged, the high output disappears, transistors 41 and 25 are switched and the relays are relatched to restore normal operation.

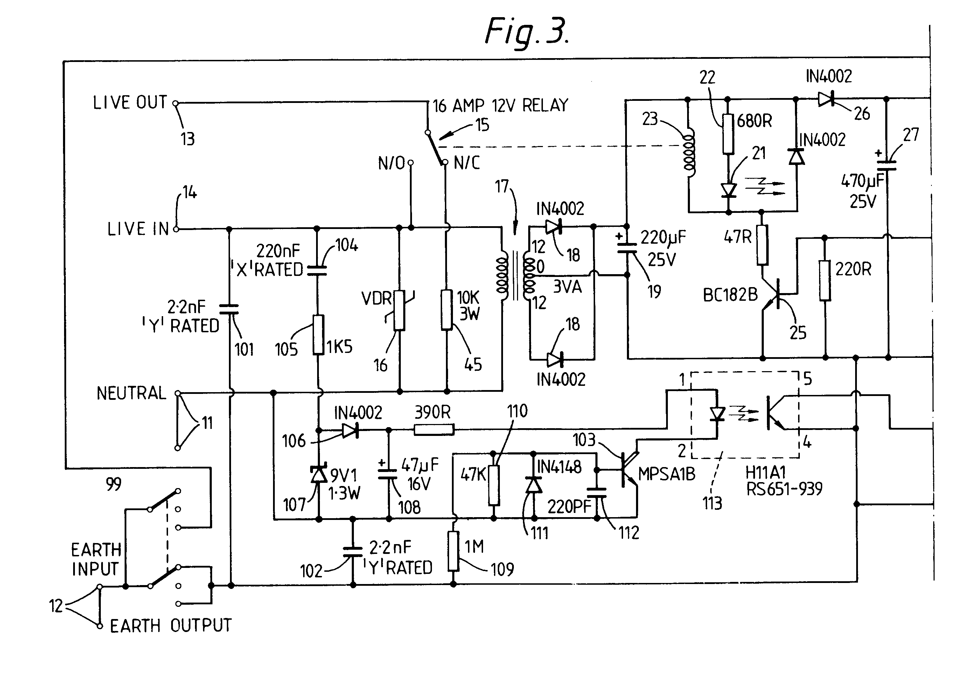

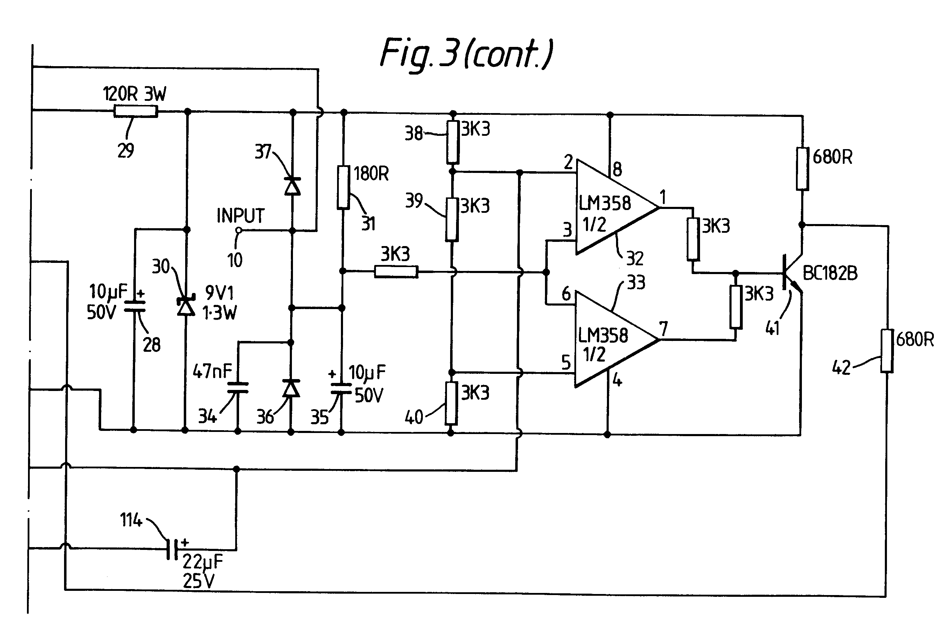

Figure 3 illustrates a form of the invention in which upstream earth/neutral continuity is monitored.

Referring first to the left hand side of the circuit and the lower part, capacitors 101 and 102 (220 nF x-rated) are connected in series across the mains supply but normally prevented from functioning as a potential divider by earthing of the connection between them, which should short-circuit 102 through the upstream neutral-to-earth connection (not shown). If this connection fails, through a loose connection in the mains connecting lead or otherwise, a substantial voltage will appear on the floating earth terminal (up to half the supply voltage, depending on the particular equipment (if any) plugged into the sockets)

This voltage is applied to the base of transistor 103; components 104 to 108 constitute a half-wave rectifier power supply (9 volts nominal) for this transistor, and 109 to 112 a filter circuit. The transistor switches at an input of about 24 volts and drives an opto-isolator 113, and the output from this is applied directly to pin 2 of the comparator 32 to unbalance it, using a smoothing capacitor 114 to establish a time constant long enough to ensure that the signal remains "on" during negative half-cycles of the supply, when the transistor 103 may cut off.

The circuit is otherwise as shown in Figure 2, except that (a) relay 20/24 and its reset switch 46 are omitted; the circuit thus resets automatically in the absence of a fault, as if the reset button were continuously held down; and (b) an optional test facility is provided by a 3-way 2-pole rocker switch 99, shown in its normal position. In its central position this simulates an upstream earth discontinuity (which itself simulates a discontinuity within the system); in its third position it earths the pilot line via terminal 10. Thus the monitor should trip and not reset in both second and third positions.

## Claims

1. An electric supply installation comprising a control unit (4), a chain of power supply sockets (1) connected at one end to live, neutral and earth conductors of a power source (5) through the control unit (4); a pilot conductor (8) which is connected via an impedance (9) to the earth conductor at the socket of the chain furthest from the control unit and returns to the control unit; the said impedance (9) forming part of a potential divider (9, 31) through which pilot current flows to establish a pilot potential on the pilot conductor; and comparator means (32-33, 38-42, 25, 23, 15) which monitors the said pilot potential and disconnects the live pole of the chain of supply sockets from the live pole of the supply if the pilot potential falls either above or below a preset range of values.

2. An installation as claimed in claim 1 in which the said comparator means is a window comparator.

3. An installation as claimed in claim 2 which the window comparator includes an unbalancing capacitor (47) of such value that it will produce an "out-of-window" signal on reset until the circuits have stabilised.

4. The installation as claimed in claim 1 in which, when the live pole of the chain of sockets is disconnected from the live pole of the supply it is connected to neutral or to earth via a discharge resistor (45).

5. An installation as claimed in any one of the preceding claims in which the pilot conductor (8) is independent of and physically separate from link-leads (2) interconnecting the power supply sockets (1) of the chain.

6. An installation as claimed in any one of the preceding claims which includes also means (101-113) for detecting loss of continuity from neutral to earth upstream of the control unit (4) and in such event providing an input signal to the said comparator means such that it will produce a "fault" output resulting in disconnection of the live pole of the supply.

7. An installation as claimed in Claim 6 in which the said means (101-113) comprises a pair of capacitors (101,102) constituting a potential divider between live and neutral poles of the supply, except that one of the capacitors is normally shorted by the neutral-to-earth connection outside the consumer' s installation.

8. An installation as claimed in Claim 7 in which said input signal is transmitted to the comparator means via an opto-isolator (113).

## Patentansprüche

1. Elektrische Versorgungsinstallation mit einer Steuereinheit (4), einer Reihe von Leistungsversorgungssockeln (1), die an einem Ende mit dem Phasen-, Mittelpunkts- und Erdleiter einer Spannungsquelle (5) über eine Steuereinheit (4) verbunden sind, einem Pilotleiter (8), der über eine Impedanz (9) mit dem Erdleiter des Sockels verbunden ist, der in der Kette am weitesten von der Steuereinheit entfernt ist und zur Steuereinheit zurückführt, wobei die Impedanz (9) Teil eines Potentialteilers (9, 31) ist, durch den der Pilotstrom fließt, so daß ein Pilotpotential an dem Pilotleiter aufgebaut wird, und einer Vergleichereinrichtung (32-33, 38-42, 25, 23, 15), der das Pilotpotential überwacht und den unter Spannung stehenden Anschluß der Kette von Versorgungssockeln von dem unter Spannung stehenden Anschluß der Versorgung unterbricht, wenn das Pilotpotential entweder über oder unter einem voreingestellten Bereich von Werten liegt.

2. Installation nach Anspruch 1, wobei die Vergleichereinrichtung ein Vergleicher mit einem Vergleichsfenster ist.

3. Installation nach Anspruch 2, wobei der Vergleicher mit einem Vergleichsfenster einen nicht balancierenden Kondensator (47) mit einem solchen Wert aufweist, daß dieser bei einem Rücksetzen solange ein "außerhalb des Fensters"-Signal erzeugt, bis die Schaltungen stabilisiert sind.

4. Installation nach Anspruch 1, wobei wenn der unter Spannung stehende Anschluß von der Kette von Sockeln von dem unter Spannung stehendem Anschluß der Versorgung getrennt wird, dieser über einen Entladewiderstand (45) mit dem Mittelpunkt oder Erde verbunden wird.

5. Installation nach einem der vorstehenden Ansprüche, wobei der Pilotleiter (8) unabhängig von und physikalisch getrennt von den Verbindungsdrähten (2) ist, die die Leistungsversorgungssockel (1) der Kette miteinander verbinden.

6. Installation nach einem der vorstehenden Ansprüche mit Einrichtungen (101-113) zum Erkennen eines Verlustes des Durchgangs vom Mittelpunkt zur Erde in Stromrichtung nach der Steuereinheit (4) und in einem solchen Fall zum Bereitstellen eines Eingangssignals an die Vergleichereinrichtung, so daß diese eine "Fehler"-Ausgabe erzeugt, die dazu führt, daß der unter Spannung stehende Anschluß der Versorgung unterbrochen wird.

7. Installation nach Anspruch 6, wobei die Einrichtung (101-113) ein Kondensatorpaar (101, 102) aufweist, das einen Potentialteiler zwischen den unter Spannung stehenden und den Mittelpunkt-Anschlüssen der Versorgung bildet, mit der Ausnahme, daß einer der Kondensatoren üblicherweise über die Verbindung zwischen Mittelpunkt und Erde außerhalb der Installation des Benutzers kurzgeschlossen ist.

8. Installation nach Anspruch 7, wobei das Eingangssignal über einen Opto-Isolator (113) an die Vergleichereinrichtung übertragen wird.

## Revendications

1. Installation d'alimentation électrique qui comprend un appareil de commande (4), une chaîne de prises d'alimentation électrique (1) branchée en une extrémité aux conducteurs de phase, neutre et de terre d'une source de puissance (5) par l'intermédiaire de l'appareil de commande (4), un conducteur pilote (8) qui est relié via une impédance (9) au conducteur de terre au niveau de la prise de la chaîne située le plus loin de l'appareil de commande et qui revient à l'appareil de commande, ladite impédance (9) faisant partie d'un diviseur de tension (9, 31) par lequel s'écoule un courant pilote afin d'établir une tension pilote sur le conducteur pilote, et un moyen comparateur (32-33, 38-42, 25, 23, 15) qui surveille ladite tension pilote et débranche le pôle de phase de la chaîne de prises d'alimentation du pôle de phase de ladite alimentation si la tension pilote se trouve soit au-dessus, soit au-dessous d'une plage de valeurs préétablie.

2. Installation selon la revendication 1, dans laquelle ledit moyen comparateur est un comparateur à fenêtre.

3. Installation selon la revendication 2, dans laquelle le comparateur à fenêtre comprend un condensateur (47) de déséquilibrage ayant une valeur telle qu'il va produire un signal "hors fenêtre" lors de la remise en marche jusqu'à ce que les circuits se soient stabilisés.

4. Installation selon la revendication 1, dans laquelle, lorsque le pôle de phase de la chaîne de prises est débranché du pôle de phase de l'alimentation, il est relié à la terre ou au neutre via une résistance de décharge (45).

5. Installation selon l'une quelconque des revendications précédentes, dans laquelle le conducteur pilote (8) est indépendant et physiquement séparé des conducteurs de liaison (2) qui relient les prises (1) d'alimentation de puissance de la chaîne.

6. Installation selon l'une quelconque des revendication précédentes, qui comprend aussi un moyen (101-113) pour détecter une perte de continuité du neutre à la terre en amont de l'appareil de commande (4) et pour fournir, dans un tel cas, un signal d'entrée audit moyen comparateur de sorte qu'il va produire une sortie "défaut" résultant en le débranchement du pôle de phase de l'alimentation.

7. Installation selon la revendication 6, dans laquelle ledit moyen (101-113) comprend une paire de condensateurs (101, 102) qui constituent un diviseur de tension entre les pôles de phase et de neutre de l'alimentation, sauf que l'un des condensateurs est normalement court-circuité par la liaison terre-neutre extérieure à l'installation du consommateur.

8. Installation selon la revendication 7, dans laquelle ledit signal d'entrée est transmis au moyen comparateur via un photo-isolateur (113).
